# EUROPÄISCHE PATENTSCHRIFT

(11) **EP 1 980 310 B1**
(45) Veröffentlichungstag und Bekanntmachung des Hinweises auf die Patenterteilung: **04.08.2010**
(21) Anmeldenummer: 08004228.6
(22) Anmeldetag: 07.03.2008
(51) Int. Cl.: B01D 45/08

(54) **Vorrichtung zum Abscheiden von Flüssigkeitstropfen aus Gasströmen mit Stäben und Lamellen**
Device for separating liquid drops from gas flows with rods and lamellae
Dispositif de séparation de gouttes de liquide de flux de gaz avec des tiges et des lamelles

(30) Priorität: 03.04.2007 DE 202007004864 U
(43) Veröffentlichungstag der Anmeldung: 15.10.2008
(73) Patentinhaber: RWE Power Aktiengesellschaft, 45128 Essen (DE)
(72) Erfinder: Knickenberger, Bernhard, 59071 Hamm (DE)
(74) Vertreter: Polypatent

(56) Entgegenhaltungen:
- WO-A-2007/104284
- DE-U1- 20 018 970
- DE-U1- 20 302 380
- DE-U1-202005 002 674

## Beschreibung

Die Erfindung betrifft eine Vorrichtung zum Abscheiden von Flüssigkeitstropfen aus Gasströmen, insbesondere zum Abscheiden von Flüssigkeitstropfen aus Rauchgasen, zum Beispiel in Rauchgasentschwefelungsanlagen.

Aus den Gebrauchsmusterschriften mit den Veröffentlichungsnummern DE 20 2005 002 674 U1 und DE 20 2005 002 677 U1 sind Abscheidevorrichtungen mit Abscheidemitteln bekannt die durch Rollen odefr Lamellen gebildet sind. Der Nachteil ist, dass man, wenn man die Vorteile der Rollen und der Lamellenabscheidemittel nutzen möchte, sowohl Kassetten mit Stababscheidemitteln oder Kassetten mit Lamellenabscheidemitteln einsetzen muss. Der dafür erforderliche Platz ist in manchen Rauchgaskanälen jedoch nicht vorhanden. Aus diesem Grunde kann daher nur auf Kassetten mit Lamellen oder auf Kassetten mit Stäben zurückgegriffen werden.

Aus der DE 20302 380 U1 ist beispielsweise ein sogenannter Kombi-Tropfenabscheider für Rauchgasentschwefelungsanlagen bekannt, bei welchem Lamellen- und Walzenabscheider eine Einheit bilden. Sowohl die Lamellenabscheider als auch die Walzenabscheider sind in einem gesonderten Rahmen angeordnet, wobei die Lamellen sich in zwei in einem Winkel zueinander angeordneten Ebenen erstrecken und zwischen den Lamellen und den Rollen Bedüsungsmittel zur Reinigung der Lamellen vorgesehen sind. Jede der Anordnungen von Abscheidemitteln bildet mit dem jeweiligen Rahmen eine Kassette, die in ein Gehäuse eingesetzt ist.

Aus der WO 2007/104284 A2 ist eine Tropfenabscheideranordnung für Gaswäscher bekannt, die aus mindestens einer Reihe von in der Form eines V oder eines umgedrehten V angeordneten Tropfenabscheiderprofilen besteht wobei sie des weiteren mindestens eine in Gasströmungsrichtung vor der Tropfenabscheideranlage angeordnete Gleichrichteranlage aufweist, die sich aus mindestens einer Reihe von nebeneinander mit Abstand voneinander angeordneten rohrförmigen oder stabförmigen Gleichrichterelementen zusammensetzt und die Reihe der Gleichrichterelemente in der Form eines V oder eines umgedrehten V mit entgegengesetzter Neigung zu der entsprechenden Reihe der Tropfenabscheiderprofile der Tropfenabscheideranlage angeordnet ist.

Der Erfindung liegt daher die Aufgabe zugrunde, eine Abscheidevorrichtung bereitzustellen, welche sowohl die Vorteile der Stababscheidemittel als auch die Vorteile von Lamellenabscheidemitteln nutzt und zugleich einen sehr geringen Platzbedarf im Vergleich zu den bekannten Abscheidevorrichtungen hat.

Die Aufgabe wird gelöst durch die Merkmale des Anspruchs 1. Vorteilhafte Ausgestaltungen ergeben sich aus den Unteransprüchen. Die Anordnung der Lamellen erfolgt erfindungsgemäß in einer Ebene, die parallel zu den Ebenen ist, in welchen die Stäbe angeordnet sind.

Gemäß der Erfindung können die Stäbe hohl sein und somit im Grunde genommen Rohre bilden. Die Stäbe sind vorzugsweise parallel zueinander angeordnet und in parallelen Ebenen angeordnet. In der bevorzugten Ausführung weist die Vorrichtung zwei Ebenen mit Stäben auf.

Der Durchmesser eines Stabes kann vorteilhaft 50 mm betragen. Als Abstand zwischen den Stabmitten kann ein Betrag von 80 mm vorgesehen sein.

Die Lamellen sind im Querschnitt vorzugsweise im Wesentlichen bogenförmig geformt. An der konvex geformten Außenseite der Lamelle können dabei Ansätze vorgesehen sein, die sich über die gesamte Länge der Lamelle erstrecken.

Die Lamellen können parallel zu den Stäben angeordnet sein und sind vorteilhaft auch parallel zueinander angeordnet.

Das erste Abscheidemittel ist vorzugsweise in Durchströmungsrichtung der Vorrichtung vor dem zweiten Abscheidemittel angeordnet. In der Gebrauchslage ist die Vorrichtung so angeordnet, dass sie von einem horizontalen Gasstrom angeströmt wird.

In einer besonderen Ausführung können die Stäbe drehbar in dem Rahmen befestigt sein.

Insbesondere bei vertikaler Durchströmung des Tropfenabscheiders gemäß der Erfindung ist die drehbare Anordnung der Stäbe in dem Rahmen von Vorteil, da hierdurch ein Selbstreinigungseffekt bewirkt wird. Anbackungen an den Stäben aufgrund von festen Partikeln im Gasstrom führen unter dem Einfluss der Gewichtskraft zu einer Verdrehung der Stäbe, derart, dass zuverlässig verhindert wird, dass sich der freie Querschnitt zwischen den Stäben mit Ablagerungen zusetzt.

Ein Ausführungsbeispiel für eine erfindungsgemäße Vorrichtung zum Abscheiden von Tropfen aus Rauchgasen ist anhand der Zeichnung näher beschrieben. Es zeigt:

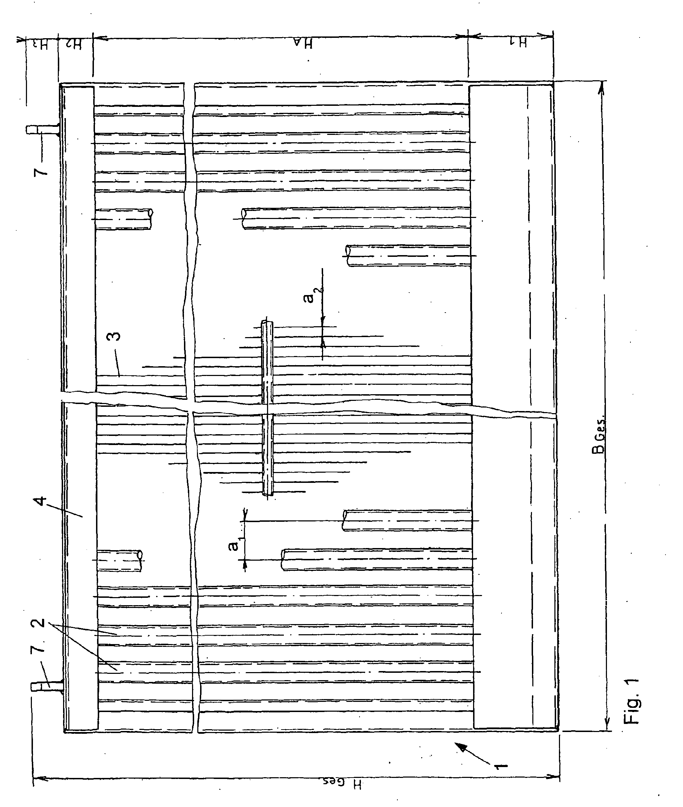

- Fig. 1: eine Ansicht der Abscheidevorrichtung von vorn und zum Teil ausgebrochen,

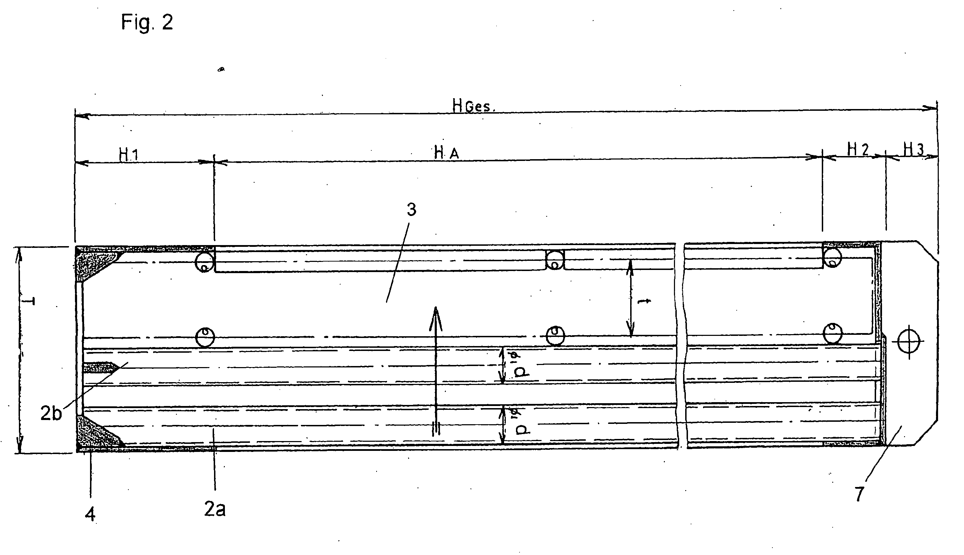

- Fig. 2: einen vertikalen Schnitt durch die Abscheidevorrichtung und

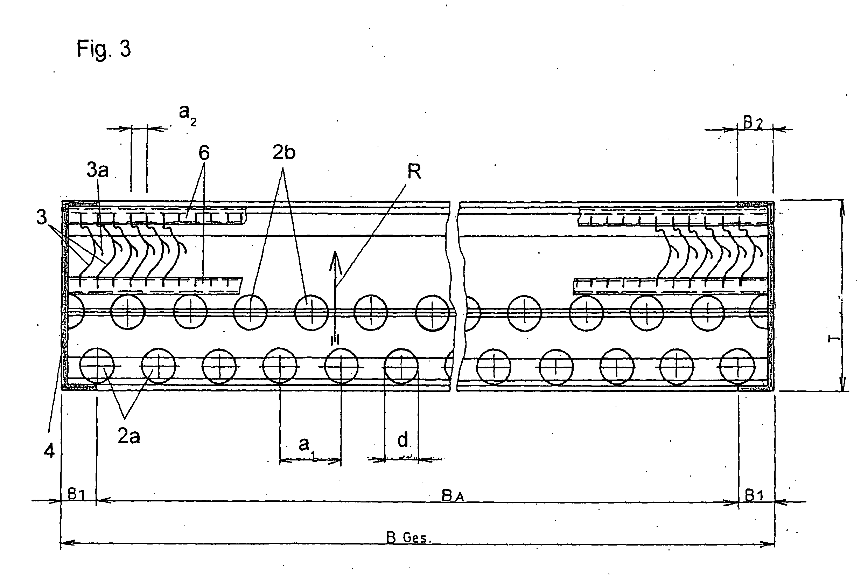

- Fig. 3: einen horizontalen Schnitt durch die Abscheidevorrichtung.

Die Abscheidevorrichtung weist einen Rahmen 4 auf, in welchern ein erstes Abscheidemittel 2, und zweite Abscheidemittel 3 angeordnet sind.

Bei den ersten Abscheidemitteln handelt es sich um Stäbe die in zwei Ebenen hintereinander und parallel zueinander angeordnet sind. Die Stäbe 2a der ersten Ebene sind dabei auf Lücke zu den Stäben 2b der zweiten Ebene gesetzt. In der Durchströmungsrichtung R hinter diesen ersten Abscheidemitteln 2 sind Lamellen 3 als zweite Abscheidemittel angeordnet. Die Lamellen haben eine im Querschnitt etwa bogenförmige Form, wobei an der konkaven Außenfläche jeweils ein Ansatz 3a angesetzt ist. Die Lamellen sind in einer Ebene hinter den ersten Abscheidemitteln 2 parallel zueinander angeordnet. Über Halteleisten 6 sind die Lamellen mit dem Rahmen 4 verbunden.

Der Rahmen hat eine Breite B gesamt und eine lichte Weite B_{A}, welche durchströmt werden kann. Die lichte Weite B_{A} ist um die Breite B₁ beziehungsweise B₂ des Rahmens 4 gegenüber der gesamten Breite verringert. Der Rahmen hat ferner eine Gesamthöhe H gesamt und eine lichte Höhe H_{A}, wobei wiederum die Rahmenhöhe H₁ beziehungsweise H₂ und zusätzlich noch die Höhe H₃ von der Montagevorrichtung 7, die lichte Höhe H_{A} gegenüber der gesamten Höhe H gesamt verringern.

Die Stäbe haben vorzugsweise einen Durchmesser von d = 50 mm und einen Abstand a₁ von 80 mm. Der Abstand von Lamelle zu Lamelle kann a₂ = 30 mm betragen.

## Patentansprüche

1. Vorrichtung zum Abscheiden von Flüssigkeitstropfen aus Gasströmen, insbesondere zum Abscheiden von Flüssigkeitstropfen aus Rauchgasen
- mit Stäben (2a, 2b) als ersten Abscheidemitteln (2) und
- mit Lamellen als zweiten Abscheidemitteln (3),
wobei die Stäbe (2) und die Lamellen (3) in einem gemeinsamen Rahmen (4) angeordnet sind und
wobei die Anordnung der Lamellen (3) in einer Ebene vorgesehen ist, die sich parallel zu den parallelen Ebenen erstreckt, in welchen die Stäbe (2) angeordnet sind.

2. Vorrichtung nach Anspruch 1, **dadurch gekennzeichnet, dass** die Stäbe (2) hohl sind.

3. Vorrichtung nach Anspruch 1 oder 2, **dadurch gekennzeichnet, dass** die Stäbe (2) parallel zueinander angeordnet sind.

4. Vorrichtung nach Anspruch 1, **dadurch gekennzeichnet, dass** das die Stäbe (2) in zwei Ebenen angeordnet sind.

5. Vorrichtung nach einem der Ansprüche 1 bis 4, **dadurch gekennzeichnet, dass** das die Stäbe (2) einen Durchmesser von 50 mm haben.

6. Vorrichtung nach einem der Ansprüche 1 bis 5, **dadurch gekennzeichnet, dass** die Stäbe (2) einen Abstand von 80 mm voneinander haben.

7. Vorrichtung nach einem der Ansprüche 1 bis 6, **dadurch gekennzeichnet, dass** die Lamellen (3) im Querschnitt im Wesentlichen bogenförmig geformt sind.

8. Vorrichtung nach Anspruch 7, **dadurch gekennzeichnet, dass** die Lamellen (3) auf einer konvex geformten Außenseite Ansätze (3a) aufweisen, die sich über die gesamte Länge der Lamellen (3) erstrecken.

9. Vorrichtung nach einem der Ansprüche 1 bis 8, **dadurch gekennzeichnet, dass** die Lamellen (3) parallel zu den Stäben (2) angeordnet sind.

10. Vorrichtung nach einem der Ansprüche 1 bis 9, **dadurch gekennzeichnet, dass** die Lamellen (3) parallel zueinander angeordnet sind.

11. Vorrichtung nach einem der Ansprüche 1 bis 10, **dadurch gekennzeichnet, dass** die Stäbe (2) in Durchströmungsrichtung (R) der Vorrichtung vor den Lamellen angeordnet sind.

12. Vorrichtung nach einem der Ansprüche 1 bis 11, **dadurch gekennzeichnet, dass** die Vorrichtung (1) in Gebrauchslage horizontal angeströmt wird.

13. Vorrichtung nach einem der Ansprüche 1 bis 12, **dadurch gekennzeichnet; dass** die Stäbe (2) drehbar in dem Rahmen (4) angeordnet sind.

## Claims

1. Device for separating fluid drops from gas flows, in particular for separating fluid drops from exhaust gases
- having rods (2a, 2b) as first separation means (2) and
- having blades as second separation means (3),
the rods (2) and the blades (3) being arranged in a common frame (4) and
the arrangement of the blades (3) being provided in a plane which extends parallel with the parallel planes in which the rods (2) are arranged.

2. Device according to claim 1, **characterised in that** the rods (2) are hollow.

3. Device according to claim 1 or claim 2, **characterised in that** the rods (2) are arranged parallel with each other.

4. Device according to claim 1, **characterised in that** the rods (2) are arranged in two planes.

5. Device according to any one of claims 1 to 4, **characterised in that** the rods (2) have a diameter of 50 mm.

6. Device according to any one of claims 1 to 5, **characterised in that** the rods (2) have a spacing of 80 mm from each other.

7. Device according to any one of claims 1 to 6, **characterised in that** the blades (3) are formed so as to be substantially curved in cross-section.

8. Device according to claim 7, **characterised in that** the blades (3) have, on an outer side which is formed in a convex manner, extension pieces (3a) which extend over the entire length of the blades (3).

9. Device according to any one of claims 1 to 8, **characterised in that** the blades (3) are arranged parallel with the rods (2).

10. Device according to any one of claims 1 to 9, **characterised in that** the blades (3) are arranged parallel with each other.

11. Device according to any one of claims 1 to 10, **characterised in that** the rods (2) are arranged upstream of the blades in the direction of flow (R) of the device.

12. Device according to any one of claims 1 to 11, **characterised in that** the device (1) is acted on by flow horizontally in the position for use.

13. Device according to any one of claims 1 to 12, **characterised in that** the rods (2) are rotatably arranged in the frame (4).

## Revendications

1. Dispositif pour séparer des gouttes de liquide des flux de gaz, en particulier pour séparer des gouttes de liquide des gaz de fumée,
- avec des tiges (2a, 2b) comme premier moyen de séparation (2), et
- avec des lamelles comme deuxième moyen de séparation (3),
dans lequel les tiges (2) et les lamelles (3) sont disposées dans un cadre (4) commun, et
dans lequel l'agencement des lamelles (3) est prévu dans un plan s'étendant en parallèle aux plans parallèles dans lesquels sont disposées les tiges (2).

2. Dispositif selon la revendication 1, **caractérisé en ce que** les tiges (2) sont creuses.

3. Dispositif selon la revendication 1 ou 2, **caractérisé en ce que** les tiges (2) sont disposées en parallèle les unes aux autres.

4. Dispositif selon la revendication 1, **caractérisé en ce que** les tiges (2) sont disposées sur deux plans.

5. Dispositif selon l'une quelconque des revendications 1 à 4, **caractérisé en ce que** les tiges (2) ont un diamètre de 50 mm.

6. Dispositif selon l'une quelconque des revendications 1 à 5, **caractérisé en ce que** les tiges (2) sont espacées de 80 mm.

7. Dispositif selon l'une quelconque des revendications 1 à 6, **caractérisé en ce que** les lamelles (3) sont formées en section transversale substantiellement en forme d'arc.

8. Dispositif selon la revendication 7, **caractérisé en ce que** les lamelles (3) présentent sur une face extérieure de forme convexe des saillies (3a) s'étendant sur toute la longueur des lamelles (3).

9. Dispositif selon l'une quelconque des revendications 1 à 8, **caractérisé en ce que** les lamelles (3) sont disposées en parallèle aux tiges (2).

10. Dispositif selon l'une quelconque des revendications 1 à 9, **caractérisé en ce que** les lamelles (3) sont disposées en parallèle les unes aux autres.

11. Dispositif selon l'une quelconque des revendications 1 à 10, **caractérisé en ce que** les tiges (2) sont disposées dans le sens de passage (R) du dispositif en amont des lamelles.

12. Dispositif selon l'une quelconque des revendications 1 à 11, **caractérisé en ce que** dans la position d'utilisation, l'écoulement passe horizontalement par le dispositif (1).

13. Dispositif selon l'une quelconque des revendications 1 à 12, **caractérisé en ce que** les tiges (2) sont disposées de façon pivotante dans le cadre (4).
